# EUROPÄISCHE PATENTSCHRIFT

(11) **EP 0 618 995 B1**
(45) Veröffentlichungstag und Bekanntmachung des Hinweises auf die Patenterteilung: **29.04.1998**
(21) Anmeldenummer: 93901719.0
(22) Anmeldetag: 22.12.1992
(51) Int. Cl.: E21B 37/06, C10L 10/04

(54) **VERWENDUNG AUSGEWÄHLTER INHIBITOREN GEGEN DIE AUSBILDUNG FESTER INKRUSTATIONEN AUF ORGANISCHER BASIS AUS FLIESSFÄHIGEN KOHLENWASSERSTOFFGEMISCHEN**
USE OF SELECTED INHIBITORS AGAINST THE FORMATION OF SOLID ORGANIC-BASED INCRUSTATIONS FROM FLUID HYDROCARBON MIXTURES
UTILISATION D'INHIBITEURS SELECTIONNES CONTRE LA FORMATION D'INCRUSTATIONS SOLIDES A BASE ORGANIQUE PROVENANT DE MELANGES D'HYDROCARBURES COULANTS

(30) Priorität: 30.12.1991 DE 4143056
(43) Veröffentlichungstag der Anmeldung: 12.10.1994
(73) Patentinhaber: Henkel Kommanditgesellschaft auf Aktien, 40191 Düsseldorf (DE); GROFFE, Jacques, F-S.-Michel-l'Observatoire (FR); ROUET, Jean, F-37360 S.-Antoine-du-Rocher (FR)
(72) Erfinder: GROFFE, Jacques, F-S.-Michel-l'Observatoire (FR); ROUET, Jean, F-37360 S.-Antoine-du-Rocher (FR); VON TAPAVICZA, Stephan, D-4006 Erkrath (DE); ZÖLLNER, Wolfgang, D-4000 Düsseldorf 13 (DE); HEROLD, Claus-Peter, D-4020 Mettmann (DE)
(86) Internationale Anmeldenummer: EP9202974
(87) Internationale Veröffentlichungsnummer: WO9313294

(56) Entgegenhaltungen:
- EP-A- 0 198 225
- EP-A- 0 323 775
- WO-A-88/03144
- DE-A- 2 612 757
- US-A- 2 873 253
- US-A- 3 837 402
- US-A- 4 005 020
- US-A- 4 729 769
- US-A- 4 813 482

## Beschreibung

Die Erfindung betrifft einen Vorschlag zur verbesserten Handhabung von fließfähigen Kohlenwasserstoffgemischen die dazu neigen beim Transport, bei der Lagerung und/oder bei der Verarbeitung feste organische Abscheidungen, insbesondere auf Kohlenwasserstoffbasis, auszubilden, die dann als unerwünschte Inkrustationen im Inneren von Pipelines, Pumpen, Filtern, Behältern und dergleichen, zurückbleiben und einen beträchtlichen Reinigungsaufwand erfordern. Der hier betroffene Problembereich ist beispielsweise besonders ausgeprägt bei der Förderung, der Lagerung und/oder dem Transport von Rohölen mit hohen Gehalten an festen paraffinischen Kohlenwasserstoffen und/oder bei der entsprechenden Handhabung von solche Kohlenwasserstoffverbindungen enthaltenden Ölfraktionen. Vergleichbare Probleme können aber auch im Zusammenhang mit der Erdgasförderung und -verarbeitung auftreten, vgl. hierzu beispielsweise F. Kerekes et al. "Maßnahmen gegen Paraffin-Ablagerungen in der Erdöl und Erdgasförderung", Erdöl-Erdgas-Zeitschrift 99 (4/1983), 110 - 118 und die dort zitierte Literatur.

Störungen in unter Normalbedingungen fließfähigen Kohlenwasserstoffgemischen durch die Abscheidung organischer Feststoffanteile - insbesondere entsprechende Paraffine und/oder Asphaltene - sind vielgestaltiger Natur und machen sich dementsprechend in unterschiedlichster Weise bemerkbar. Ein wichtiger Parameter in diesem Zusammenhang ist der Temperaturbereich des Fließ- beziehungsweise Stockpunkts der flüssigen Kohlenwasserstoffmischung. Im darüberliegenden Temperaturbereich ist die Fließfähigkeit im Prinzip sicher zu stellen, bei darunterliegenden Temperaturen erstarrt das Kohlenwasserstoffgemisch. Rohöle und/oder Kohlenwasserstofffraktionen mit vergleichsweise hoch liegenden Fließ- und Stockpunkten können durch Zusatz sogenannter Pour Point Depressants (PPD's) in ihrem Fließverhalten auch bei erniedrigten Temperaturen verbessert werden. Der Zusatz der PPD's senkt durch Interaktion mit den in der Flüssigphase auskristallisierenden Feststoffanteilen die Grenztemperatur, unterhalb deren die Fließfähigkeit des Kohlenwasserstoffgemisches verloren geht.

Unabhängig von dem hier angedeuteten Problembereich besteht aber für die praktische Handhabung solcher flüssigen, aber auch bei gasförmigen Kohlenwasserstoffgemischen ein komplexer zweiter Problembereich. Hierbei handelt es sich um die in der Praxis in vielgestaltiger Weise störenden Inkrustationen fester Kohlenwasserstoffverbindungen auf den Innenwandungen, beispielsweise von Pipelines, Pumpen, auf Filtern oder in Lagerbehältern, die auch dann auftreten, wenn an sich die Fließfähigkeit des Kohlenwasserstoffgemisches erhalten bleibt. So muß beispielsweise das Innere von Pipelines für den Rohöltransport regelmäßig zeit- und kostenaufwendigen Reinigungsoperationen unterzogen werden, weil sich im Normalbetrieb des Öltransports zunehmend Inkrustationen fester Kohlenwasserstoffverbindungen auf der Innenwand der Pipelines ausbilden. Die Funktionsfähigkeit von Pumpen oder Filtern ist durch eine solche Inkrustationsbildung im laufenden Betrieb immer dann gefährdet, wenn Inkrustationen dieser Art sich ungehindert ausbilden können. Besondere Gefahren in dieser Richtung bestehen auch wenn das normalerweise strömende Flüssiggut auf Kohlenwasserstoffbasis intermediär unvermeidlichen Zeiträumen des Stillstandes ausgesetzt ist.

Die Fachwelt bemüht sich bisher mit nur beschränktem praktischen Erfolg um eine technische Lösung dieser Problematik. Angestrebt ist, durch Zusatz wirkungsvoller Inhibitoren diese unerwünschte Inkrustationsneigung und dabei insbesondere das feste Anhaften der beispielsweise paraffinischen Inkrustationen an den mit der Flüssig- und/oder Gasphase in Kontakt stehenden festen Oberflächen zu verhindern oder wenigstens zu mindern. Der Zusatz der bekannten, den Stock- beziehungsweise Fließpunkt erniedrigenden PPD's der zuvor diskutierten Art gibt hier keine Abhilfe. Wirklich brauchbare Inhibitoren für die erfindungsgemäße Zielsetzung sind im Zusammenhang mit flüssigen Kohlenwasserstoffgemischen bisher nicht vorgeschlagen worden. Die zuvor zitierte Literaturstelle aus Erdöl-Erdgas-Zeitschrift 99 beschäftigt sich unter anderem mit Paraffinablagerungen aus Erdgaskondensaten. Berichtet wird hier über Laborversuche zur Entwicklung von Paraffin-Inhibitoren auf Basis von Netzmittel und/oder Dispergatoren. Solche über eine Wasserphase einwirkenden Netzmittel bilden einen Oberflächenfilm auf den Wandungen aus, der einer Ablagerung von Paraffinen weitgehend entgegenwirkt, beziehungsweise vorhandene Filme unterwandert und mobilisiert. Im einzelnen wird für den praktischen Einsatz eine Kombination eines Nonylphenolethoxylates und eines Dodecylbenzylsulfonats vorgeschlagen.

Die erfindungsgemäße Lehre geht von der Erkenntnis aus, daß zwei im nachfolgenden im einzelnen geschilderte Stoffklassen bevorzugt tensidischen Charakters Abhilfe bei den hier betroffenen Problemen in bisher nicht bekannter Weise geben können. Diese im nachfolgenden als Wirkstoffe (A) und (B) bezeichneten Hilfsmittel der Erfindung zeichnen sich offensichtlich dadurch aus, daß sie zum Aufziehen und zur Spreitung auf den festen Werkstoffoberflächen - üblicherweise Metalloberflächen - befähigt sind und hier vermutlich aufgrund ihrer chemischen Beschaffenheit dem Anwachsen fester Kohlenwasserstoffablagerungen und damit der unerwünschten Inkrustation entgegenwirken.

Gegenstand der Erfindung ist dementsprechend die Verwendung von
(A) Estern der Phosphorsäure und/oder deren Partialsalzen mit alkoxylierten aliphatischen, cycloaliphatischen und/oder aromatischen Alkoholen zusammen mit
(B) Umsetzungsprodukten aus Fettsäuren und Dialkanolaminen in wenigstens 0,5-fach molarem Überschuss an Dialkanolamin - nachfolgend auch als Fettsäure-Oligo-Dialkanolamide bezeichnet -
als Inhibitoren gegen die Ausbildung fester Kohlenwasserstoffinkrustationen aus fließfähigen und zur Bildung solcher Inkrustationen neigenden Kohlenwasserstoffgemischen. Der im Zusammenhang mit der Komponente A benutzte Begriff der aromatischen Alkohole schließt Phenole und entsprechende Verbindungen mit der beziehungsweise den -OH-Gruppe(n) in Bindung an den aromatischen Rest ein.

Bevorzugt wird erfindungsgemäß mit Inhibitoren gemäß (A) und/oder (B) mit Tensidcharakter gearbeitet, die darüber hinaus zur Netzung von und insbesondere Spreitung auf festen Werkstoffoberflächen auch in Gegenwart der fließfähigen Kohlenwasserstoffphase befähigt sind, auch wenn es sich dabei um flüssige Kohlenwasserstoffgemische handelt. Die erfindungsgemäßen Inhibitoren gemäß (A) und/oder (B) eignen sich insbesondere zum Schutz von metallischen Werkstoffoberflächen die im Kontakt mit der zur Inkrustationsbildung neigenden fließfähigen Kohlenwasserstoffphase stehen.

Zur Definition der erfindungsgemäßen Inhibitoren (A):

Die Wirkstoffe dieser erfindungsgemäß eingesetzten Inhibitorklasse sind Ester der Phosphorsäure mit ausgewählten Alkoholen. Die Erfindung umfaßt dabei den Einsatz von entsprechenden Phosphorsäuretriestern. In bevorzugten Ausführungsformen werden Partialester beziehungsweise Partialestergemische der Phosphorsäure und der im nachfolgenden noch zu schildernden ausgewählten Alkohole eingesetzt. Hierbei kann es zweckmäßig sein im Falle der Verwendung solcher Partialester die nicht veresterten Säuregruppen in Form ihrer Salze, insbesondere in Form der Alkalisalze, der Amoniumsalze, der Alkanolaminsalze und/oder der Aminsalze zum Einsatz zu bringen. Besonders geeignet können als Inhibitorkomponente (A) Gemische von Mono- und/oder Diestern der Phosphorsäure beziehungsweise ihrer Salze sein.

Als esterbildende Alkoholkomponenten werden im Rahmen dieser Inhibitorkomponente (A) alkoxylierte aliphatische, cycloaliphatische und/oder aromatische Alkohole eingesetzt, die bevorzugt wenigstens 3, insbesondere wenigstens 4 bis 6 C-Atome im aliphatischen, cycloaliphatischen und/oder aromatischen Alkoholrest enthalten. Eine besonders geeignete Klasse von esterbildenden Alkoholen sind entsprechende alkoxylierte Phenolderivate, wobei alkoxylierten Alkylphenolen als Phosphorsäureester-bildenden Alkoholkomponenten besondere Bedeutung zukommen kann. Alkoxylierte Fettalkohole sind eine weitere bevorzugte Klasse von Verbindungen zum Aufbau der Inhibitoren zu (A).

Als Alkoxylierungsprodukte dieser Alkohole werden im Rahmen der Erfindung insbesondere die entsprechenden ethoxylierten und/oder propoxylierten Derivate monofunktioneller Alkohole beziehungsweise Phenole eingesetzt. Der Alkoxylierungsgrad kann dabei beispielsweise im Bereich von 1 bis 20, insbesondere im Bereich von etwa 3 bis 15 liegen und wird im einzelnen in an sich bekannter Weise mitbestimmt durch die Größe des jeweiligen Kohlenwasserstoffrestes im monofunktionellen Alkohol. So haben sich als ausgewogene und wirkungsvolle alkoxylierte Alkohole für die Bildung der Inhibitorkomponente (A) im Sinne der Erfindung etwa ethoxylierte Nonylphenole mit im Mittel 5 bis 10 EO-Einheiten pro Mol Nonylphenol als sehr geeignet erwiesen. Hier und im nachfolgenden steht das Kürzel "EO-" für den Ethylenoxidrest. Eine bevorzugte Komponete (A) für die Lehre der Erfindung sind Gemische der zuvorgenannten Salze, insbesondere der Natriumsalze von Mono- und Diestern der Phosphorsäure mit solchen Nonylphenol/5-10 EO-Addukten. EO-Addukte von Fettalkoholen des Bereichs von C₈₋₂₀, insbesondere C₁₀₋₁₈, mit 1 - 20 EO-Einheiten, bevorzugt etwa 3 - 15 EO-Einheiten sind eine weitere wichtige Klasse für die Ausbildung der Inhibitoren zu (A).

Die erfindungsgemäß verwendeten Inhibitoren der Wirkstoffklasse (B) sind definitionsgemäß die zuvor erläuterten Fettsäure-Oligo-Dialkanolamide. Der Begriff der Fettsäuren umfaßt in diesem Sinne Monocarbonsäuren mit wenigstens 6 bis 8 C-Atomen, wobei insbesondere Säuren mit wenigstens 10 C-Atomen und vor allem Monocarbonsäuren des Bereichs mit 12 und mehr C-Atomen besonders bevorzugt sind. Die Carbonsäuren können - unter Berücksichtigung der nachstehend noch gegebenen Erläuterungen - gesättigt und/oder ungesättigt sein. Ein- und/oder mehrfach olefinisch ungesättigte Carbonsäuren, insbesondere des Bereiches von C₁₂₋₂₄, sind besonders geeignete Vertreter.

Die Carbonsäuren liegen dabei in der erfindungsgemäßen Inhibitorkomponente (B) als Oligo-Dialkanolamide vor, d.h. als Carbonsäureamide aus der Umsetzung mit einem beschränkten Überschuß an Dialkanolaminen. Als Dialkanolamine sind Verbindungen mit vergleichsweise niederen Hydroxyalkylresten, insbesondere mit entsprechenden Resten mit bis zu 5, vorzugsweise mit bis zu 3 C-Atomen bevorzugt.

Diethanolamin kann zur Herstellung der Inhibitorkomponente (B) besonders geeignet sein.

Für die erfindungsgemäßen Zwecke sind dabei entsprechende Fettsäure-Umsetzungsprodukte geeignet, die mit einem leichten Überschuß des Dialkanolamins über die zur Fettsäureamidbildung stöchiometrisch benötigte Menge hinaus hergestellt worden sind. Geeignet sind insbesondere Inhibitorkomponenten (B), bei deren Herstellung die Reaktionskomponente auf Basis der Fettsäure mit einem wenigstens etwa 0,5-fach molaren Überschuß an Dialkanolamin zur Umsetzung gebracht worden ist. Geeignet können Reaktionsprodukte von Fettsäuren und Dialkanolaminen sein, die das Dialkanolamin in etwa 0,5 bis 3-fachem molaren Überschuß zur Carbonsäuremenge aufweisen. Wird die Umsetzung der die Inhibitorkomponente (B) bildenden Reaktanten bei hinreichend hohen Temperaturen - beispielsweise bei Temperaturen oberhalb 175 bis 180°C - vorgenommen, dann findet einerseits die Carbonsäureamidbildung statt, andererseits wird durch Wasserabspaltung und Etherbildung zwischen den freien Hydroxylgruppen der Dialkanolamine eine Kettenverlängerung des amidbildenden Reaktanten bewirkt, wie das im nachfolgenden für eine idealisierte Umsetzung zwischen einem Mol einer Carbonsäure RCOOH und zwei Mol Diethanolamin dargestellt ist:

Bei Umsetzungstemperaturen im Bereich von etwa 190°C fällt ein Fettsäureamid der idealisierten Formel 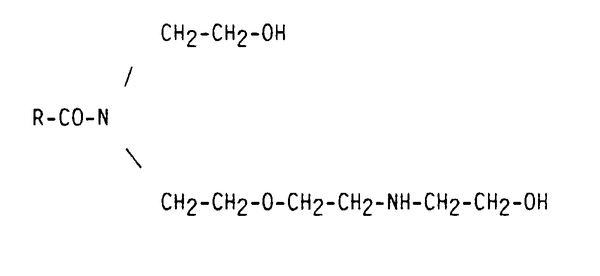 an. Auch eine Verknüpfung unter Bildung eines tert.-N-Atoms im Ketten-verlängerten Rest ist möglich.

Für die Wirkung der erfindungsgemäßen Inhibitorkomponente(n) gemäß (A) und/oder (B) kann es wichtig sein, daß sie eine gewisse Fließfähigkeit besitzen. In diesem Zusammenhang kann insbesondere bei der Auswahl der Carbonsäureamidverbindungen olefinisch ein- und/oder mehrfach ungesättigten Carbonsäuren Bedeutung zukommen. Entsprechende Fettsäuren natürlichen Ursprungs und dabei insbesondere olefinisch ungesättigte Fettsäuregemische sind für die Herstellung der Inhibitorkomponenten gemäß (B) besonders geeignet. Ein wichtiges Beispiel hierfür sind bekanntlich Tallölfettsäuren, die zum weitaus überwiegenden Anteil aus einer Mischung von olefinisch einfach ungesättigten, zweifach ungesättigten und dreifach ungesättigten C₁₈-Monocarbonsäuren bestehen. Andere geeignete natürliche Einsatzmaterialien für ungesättigte Fettsäuren sind pflanzliche Esteröle, die olefinisch ein- und gegebenenfalls mehrfach ungesättigte Carbonsäuren, insbesondere des Bereichs von C₁₆₋₂₄ aufweisen. Beispielsweise seien hier genannt: Palmöl, Erdnußöl, Rizinusöl, Sojaöl, Fischöl und insbesondere Rüböl.

Besonders bevorzugt kann es sein, daß als Komponente (B) unter Normalbedingungen fließfähige Umsetzungsprodukte von bevorzugt wenigstens überwiegend ungesättigten C₁₆₋₂₀-Carbonsäuren und Diethanolamin in 0,5 bis 3-fachem molaren Überschuß zur Carbonsäuremenge verwendet werden. In einer weiterhin bevorzugten Ausführungsform ist vorgesehen, daß als Komponente (B) die Umsetzungsprodukte aus der Reaktion von Tallölfettsäuren mit Diethanolamin in Molverhältnissen von etwa 1 : 1,5-3 unter Wasserabspaltung und wenigstens weitgehender Oligomerisierung des Diethanolamins verwendet werden.

Die erfindungsgemäße Lehre sieht vor, die Inhibitorkomponenten (A) und (B) als Mischungen von (A) und (B) in dem zur Inkrustationsbildung neigenden Kohlenwasserstoffgemisch zum Einsatz zu bringen, wobei hier der breite Bereich der Mengenverhältnisse A/B von etwa 5/95 bis 95/5 in Betracht kommt. Bevorzugte Mischungsverhältnisse liegen innerhalb des Bereichs von etwa 25/75 bis 75/25 und insbesondere im Bereich von etwa 40/60 bis 60/40. Die hier angegebenen Mengenverhältnisse beziehungsweise Bereiche beziehen sich auf Gewichtsverhältnisse der Komponenten (A) und (B) zueinander. Etwa gleiche Gewichtsmengen von (A) und (B) sind besonders wichtige Inhibitorgemische im Sinne der erfindungsgemäßen Lehre.

Zur Inertisierung der zu schützenden Wandbereiche gegen den unerwünschten Aufbau von Inkrustationen ist eine Mehrzahl technischer Möglichkeiten gegeben. In einer Ausführungsform wird vorgesehen, die Inhibitoren beziehungsweise Inhibitorgemische als Lösung und/oder Emulsion beziehungsweise Dispersion in einer geeigneten wässrigen und/oder organischen Hilfsflüssigkeit auf die zu schützenden Wandbereiche aufzubringen und dort aufziehen zu lassen. Beispielsweise können Lösungen der Inhibitoren beziehungsweise Inhibitorgemische in Lösungsmitteln auf die zu schützenden Wandflächen aufgetragen, beispielsweise aufgesprüht werden, bevor die jeweilige Arbeitsvorrichtung mit dem zur Inkrustationsbildung neigenden Kohlenwasserstoffgemisch beaufschlagt wird.

Als Hilfsflüssigkeiten eignen sich dabei entsprechende wäßrige und/oder organische Systeme. Die erfindungsgemäß eingesetzten Inhibitoren besitzen in der bevorzugten Ausführungsform aufgrund ihres tensidischen Charakters ein gewisses Löse- beziehungsweise Selbstemulgiervermögen in wäßriger Phase und können in dieser Form an die zu schützenden Wandbereiche oder sonstige Feststoffflächen angetragen werden. Aufgrund ihres starken Aufziehvermögens auf Feststoffoberflächen aus insbesondere Metall eignen sich aber auch Lösungen und/oder Emulsionen der Inhibitoren in organischen beziehungsweise organisch-wäßrigen Flüssigsystemen für eine solche Vorbehandlung. Falls erforderlich kann durch Mitverwendung von Hilfsemulgatoren in an sich bekannter Weise die Homogenität der Flüssigphase für die Inertisierung der zu schützenden Wandflächen gegen die unerwünschte Inkrustationsbildung sichergestellt oder verbessert werden.

Die Ausbildung der erfindungsgemäßen Schutzschichten gegen die unerwünschte Inkrustationsbildung ist aber nicht auf eine solche Vorbehandlung der zu schützenden Bereiche eingeschränkt. Sehr viel einfacher ist, in der Regel vergleichsweise geringe Mengen der Inhibitoren den Kohlenwasserstoffgemischen zuzusetzen, die in Abwesenheit der erfindungsgemäßen Zusatzstoffe die unerwünschte Inkrustationsbildung bewirken. So kann es zweckmäßig sein, die tensidischen Inhibitoren flüssigen Kohlenwasserstoffgemischen in Mengen von etwa 5 bis 1.000 ppm, vorzugsweise in Mengen von etwa 10 bis 500 ppm und insbesondere in Mengen von etwa 20 bis 200 ppm zuzusetzen. Es hat sich gezeigt, daß auch in derart stark verdünnten Applikationskonzentrationen - die beispielsweise im praktischen Arbeiten im Bereich von etwa 30 bis 100 ppm liegen können - die tensidischen Inhibitoren auf die Wandflächen aus beispielsweise Metall aufziehen und hier wirkungsvoll die erfindungsgemäße Aufgabenstellung lösen. Dabei hat sich darüber hinaus gezeigt, daß ein wirkungsvoller Schutz auch dann erreicht werden kann, wenn diese Zugabe der erfindungsgemäßen Inhibitoren lediglich absatzweise, beispielsweise einem durch eine Pipeline geführten Rohölstrom beigegeben wird. Die Inertisierung der Wandinnenbereiche gegen unerwünschte Paraffinablagerung bleibt für einen beträchtlichen Zeitraum bestehen, auch wenn in diesem nachfolgenden Zeitraum der Rohölstrom keine Inhibitorkomponenten enthält. Die hier dargestellten Ausführungsformen können auch miteinander verbunden werden.

In einer wichtigen Ausführungsform der Erfindung werden die definierten Inhibitorkomponenten gemäß (A) und (B) in Kombination mit konventionellen Stockpunktserniedrigern eingesetzt, wobei zur Beschaffenheit dieser Verbindungen auf den einschlägigen Stand der Technik verwiesen werden kann. Stockpunktserniedriger des Handels sind bekanntlich beispielsweise mit längeren Resten verzweigte Polymerverbindungen, beispielsweise Acrylatpolymere, die Reste langkettiger Fettalkohole - insbesondere des Bereichs C₂₀₋₂₄ - in Esterbindung an der Polymerkette aufweisen. Weitere Beispiele für besonders bekannte Fließverbesserer beziehungsweise Stockpunktserniedriger der hier angesprochenen Art sind den Klassen der Polyethylene und der Ethylen-Vinylacetat-Copolymere beziehungsweise Ethylen-Vinylpropionat-Copolymere zuzuordnen. Wenn auch der Wirkungsmechanismus dieser Produkte im einzelnen nicht vollständig geklärt ist, so haben sie doch gemeinsam, daß zunächst die modifizierenden Hilfsstoffe zusammen mit dem Rohöl auf Temperaturen weit oberhalb des Stockpunktes erwärmt werden müssen. Beim nachfolgenden Abkühlen treten dann Interaktionen zwischen den gelösten Inhibitoren vom PPD-Typ und den sich ausscheidenden organischen Feststoffen statt. In der Regel wird das Kristallwachstum behindert, so daß kleine Partikel entstehen, die keine Bildung von Netzwerken zulassen. Im einzelnen wird verwiesen auf die eingangs zitierte Veröffentlichung Erdöl-Erdgas-Zeitschrift 99, 113/114.

Die Inkrustationsinhibierung im Sinne der erfindungsgemäßen Lehre wird ersichtlich von anderem Gesetzmäßigkeiten bestimmt. Die Belegung der vor Inkrustationsbefall zu schützenden Wandflächen und die Spreitung der erfindungsgemäßen Inhibitoren (A) und/oder (B) auf diesen Wandflächen fordert keine gemeinsame Erhitzung, beispielsweise des zu transportierenden Rohölsstromes und der Inhibitoren beziehungsweise Inhibitorkombination im Sinne der Erfindung.

Es hat sich allerdings gezeigt, daß die Mitverwendung der erfindungsgemäßen Inhibitoren zu (A) und (B) auch einen Einfluß auf die Ausgestaltung der beispielsweise im Ölstrom sich bildenden paraffinischen Feststoffkristalle haben kann. Kristallformationen, wie sie sich unterhalb des sogenannten Trübungspunktes (Cloud-Point) ausbilden, können auch durch Mitverwendung der erfindungsgemäßen Inhibitoren zu (A) und (B) mit beeinflußt werden. Untersuchungen haben gezeigt, daß eine charakteristische Erscheinung sich in der Verkleinerung der Kristallitgröße und damit der in fester Verbindung miteinander stehenden Feststoffanteile ausdrücken kann. Dieser Erscheinung kann sich positiv auf das Fließverhalten des Feststoffausscheidungen enthaltenden Ölstromes auswirken, wenn auch nicht notwendigerweise eine Stockpunktserniedrigung damit verbunden sein muß.

### Beispiele

### Versuchsanordnung

Ein Vorratsbehälter für jeweils 5 Liter des zu untersuchenden Öles wird mit einem Rührer, einem Thermometer zur Bestimmung der Öltemperatur, einer Ölabzugsleitung und einer Ölzuführleitung versehen. Diese Zu- und Abführungen sind Teil eines mittels einer Pumpe aufrechterhaltenen Ölkreislaufs, der mit einstellbarer Fließgeschwindigkeit das Öl im Kreislauf führt.

In dieser Kreislaufleitung für den umgepumptem Ölstrom ist ein Rohrstück aus Eisen vorgesehen, daß mit einer dichten Packung von Raschigringen gefüllt ist. Dieses Eisenrohrteilstück lagert in einem Kühlbad, dessen Temperatur während des jeweiligen Verfahrenszeitraums thermostatistisch geregelt ist. Auch die Temperatur der Ölmenge im Vorratsbehälter ist durch thermostatische Regulierung während des Verfahrenskreislaufs auf den jeweils vorbestimmten Wert einzustellen beziehungsweise zu halten.

Unmittelbar vor Eintritt des aus dem Vorratsbehälter abgezogenen Ölstromes in das mit Raschigringen gefüllte Eisenrohrteilstück wird der an diesem Punkt des Ölkreislaufs bestehende Flüssigkeitsdruck bestimmt und mittels eines zugeschalteten Manometers angezeigt.

### Verfahrensbedingungen

Die Temperatur des im Vorratsbehälter befindlichen Öles wird auf einen vorbestimmten Wert von etwa 20 bis 30°C oberhalb des Stockpunkts der jeweiligen Ölprobe eingestellt und bei diesem Wert thermostatisch gehalten.

Die Temperatur des Kühlbades, in das das mit Raschigringen gefüllte Eisenteilstück des Kreislaufstromes eintaucht, wird auf eine Temperatur im Bereich bis etwa 4°C oberhalb des Stockpunktes der jeweils eingesetzten Ölprobe eingestellt und beim vorgegebenen Wert im Bereich +/- 1°C gehalten.

Die Pumpleistung im Kreislaufstrom des Öles wird auf einen vorgegebenen Wert eingestellt und während der Versuchsdauer bei diesem Wert konstant gehalten. In den im nachfolgenden angegebenen Versuchen beträgt die Pumpleistung des Flüssigkeitsstromes 15 ml/min.

Ein Versuchszyklus beträgt in der Regel 8 Stunden. Durch Inkrustationsbildung in dem mit Raschigringen gefüllten und gekühlten Eisenrohrteilstück tritt - im Ausmaß der sich ausbildenden Inkrustation und damit der Durchtrittsverengung für den Ölteilstrom - eine Drucksteigerung im Ölstrom unmittelbar vor dessen Eintritt in das gekühlte Rohrstück auf. Der jeweilige Versuchszyklus wird vor Ablauf von 8 Stunden abgebrochen, wenn eine Drucksteigerung von 50 % des Anfangsöldrucks zu Beginn des Versuchszyklus aufgetreten ist.

### Versuchsergebnisse

Ein paraffinhaltiges Rohöl mit einem nach ASTM D 97 B ermittelten Stockpunkt (maximaler Stockpunkt) von 18 +/- 1°C wird in dem Vorratsbehälter auf die Regeltemperatur von 40°C eingestellt. Die Temperatur des Kühlbades für das mit Raschigringen gefüllte Teilstück der Kreislaufleitung wird bei 22°C gehalten.

Der unmittelbar nach Eröffnung und Einstellung des Ölkreislaufs gemessene Druck in der Abzugsleitung vor dem Eintritt des Ölstromes in das gekühlte Teilstück beträgt ca. 2 bar.

In einem ersten Versuch wird ohne Zusatz von Inhibitoren im Sinne der Erfindung gearbeitet. Nach einer Kreislaufführung des Öles unter den angegebenen Arbeitsbedingungen für den Zeitraum von 4,5 Stunden ist eine Drucksteigerung an der Meßstelle des Ölstromes von 50 % gegeben. Der Versuch wird zu diesem Zeitpunkt abgebrochen.

In den nachfolgenden Versuchen wird ein Inhibitorgemisch der erfindungsgemäßen Komponenten (A) und (B) gemäß der folgenden Definition eingesetzt:

### Inhibitorkomponente (A)

Eine Mischung von Phosphorsäuremono- und -diester wird durch Umsetzung von 2,8 mol Nonylphenol + 6,5 EO mit 1,0 mol P₂O₅ hergestellt. Das saure Estergemisch wird mit der stöchiometrischen Menge an 50-%iger wäßriger Natronlauge in die entsprechenden Salze überführt. Als Hilfsemulgator wird der Stoffmischung eine untergeordnete Menge an Nonylphenol + 6,5 EO zugegeben (ca. 23 Gew.-% Hilfsemulgator bezogen auf Gesamtgemisch).

Der Inhibitor liegt in Form einer hochviskosen Flüssigphase vor, die in Wasser und flüssigen organischen Lösungsmitteln emulgierbar/löslich ist.

### Inhibitorkomponente (B)

Eingesetzt wird ein Tallölfettsäure-Oligo-Diethanolamid aus einem Mol Tallölfettsäure (ca. 2 Gew.-% Restharz) und 2 mol Diethanolamin. Das bei einer Umsetzungstemperatur von 190°C gewonnene Reaktionsprodukt besitzt eine Aminzahl von 123 und eine Säurezahl von 4,4. Es handelt sich um ein unter Normalbedingungen fließfähiges Reaktionsprodukt.

In den nachfolgenden Versuchen werden die Inhibitoren zu (A) und (B) in gewichtsgleichen Mengen in Abmischung miteinander eingesetzt.

### Beispiel 1

Dem Rohöl wird das erfindungsgemäße Inhibitorgemisch in einer Menge von 30 ppm zugesetzt und darin sorgfältig vor Aufnahme des Ölkreislaufstroms verteilt. Anschließend wird unter den angegebenen Verfahrensbedingungen der Ölkreislauf für den Zeitraum von 8 Stunden aufrechterhalten. Die Drucksteigerung des Ölstromes beim Eintritt in das gekühlte und mit Raschigringen gefüllte Rohrteilstück beträgt nach Ablauf dieses Versuchszeitraumes ca. 5 %.

### Beispiel 2

Die Bedingungen des Beispiels 1 werden wiederholt, das Inhibitorgemisch der Erfindung wird jetzt jedoch in einer Menge von 250 ppm dem Rohöl zugegeben.

Bei Abbruch des Versuches nach 8 Stunden ist kein merklicher Druckanstieg in dem Ölkreislaufstrom festzustellen.

### Beispiel 3

Das mit Raschigringen gefüllte Teilstück der Kreislaufleitung wird vor Aufnahme des Versuches über Nacht in eine 2 gew.-%ige wäßrige Emulsion des erfindungsgemäßen Inhibitorgemisches eingelegt. Nach Abtropfen der wäßrigen Phase wird dieses Eisenrohrteilstück in den vorgesehenen Kreislauf eingebaut. Dann wird im Vorratsbehälter das zur Paraffinabscheidung befähigte Rohöl ohne Mitverwendung zusätzlicher Inhibitoren gemäß (A) und/oder (B) vorgelegt und der Ölkreislauf unter den angegebenen Bedingungen in Gang gesetzt. Nach 8-stündiger Verfahrensdauer ist kein wesentlicher Druckanstieg im Teilstrom vor dem Eintritt in das gekühlte Rohrteilstück festzustellen.

## Patentansprüche

1. Verwendung von
(A) Estern der Phosphorsäure und/oder deren Partialsalzen mit alkoxylierten aliphatischen, cycloaliphatischen und/oder aromatischen Alkoholen und
(B) Fettsäure-Oligo-Dialkanolamiden (Umsetzungsprodukte aus Fettsäuren und Dialkanolaminen in wenigstens 0,5-fach molarem Überschuss an Dialkanolamin)
als Inhibitoren gegen die Ausbildung von Inkrustationen auf Basis organischer Feststoffe aus fließfähigen flüssigen und/oder gasförmigen und zur Bildung solcher Inkrustationen neigenden Kohlenwasserstoffgemischen.

2. Ausführungsform nach Anspruch 1, dadurch gekennzeichnet, daß Inhibitoren gemäß (A) und (B) mit Tensidcharakter eingesetzt werden, die zur Netzung von und insbesondere Spreitung auf festen Werkstoffoberflächen auch in Gegenwart der fließfähigen Kohlenwasserstoffphase befähigt sind.

3. Ausführungsform nach Ansprüchen 1 und 2, dadurch gekennzeichnet, daß die tensidischen Inhibitoren auf die zu schützenden Wandbereiche, gegebenenfalls als Lösung und/oder Emulsion beziehungsweise Dispersion in wäßrigen und/oder organischen Hilfsflüssigkeiten aufgebracht werden, wobei bevorzugt die Inhibitoren den inkrustationsbildenden Kohlenwasserstoffgemischen in geringen Mengen beigemischt werden.

4. Ausführungsform nach Ansprüchen 1 bis 3, dadurch gekennzeichnet, daß die tensidischen Inhibitoren flüssigen Kohlenwasserstoffgemischen in Mengen von 5 bis 1.000 ppm, vorzugsweise in Mengen von 10 bis 500 ppm und insbesondere in Mengen von 20 bis 200 ppm zugesetzt werden.

5. Ausführungsform nach Ansprüchen 1 bis 4, dadurch gekennzeichnet, daß Gemische von (A) und (Bj in Mengenverhältnissen von A/B im Bereich von 5/95 bis 95/5, bevorzugt im Bereich von 25/75 bis 75/25 und insbesondere im Bereich von 40/60 bis 60/40, eingesetzt werden.

6. Ausführungsform nach Ansprüchen 1 bis 5, dadurch gekennzeichnet, daß als Komponente (A) mit Tensidcharakter Partialester der Phosphorsäure und/oder ihre Salze mit alkoxylierten Phenolverbindungen eingesetzt werden, wobei Mono- und/oder Diester der Phosphorsäure beziehungsweise ihre Salze mit ethoxylierten und/oder propoxylierten Alkylphenolen bevorzugt sind.

7. Ausführungsform nach Ansprüchen 1 bis 6, dadurch gekennzeichnet, daß als Komponente (A) ein Gemisch der Salze von Mono- und Diestern der Phosphorsäure mit ethoxylierten Nonylphenolen mit im Mittel 5 - 10 Ethylenoxid-Einheiten pro Mol Nonylphenol verwendet wird, wobei die entsprechenden Alkalisalze, Ammoniumsalze, Alkanolaminsalze und/oder Aminsalze bevorzugt werden.

8. Ausführungsform nach Ansprüchen 1 bis 7, dadurch gekennzeichnet, daß als Komponente (B) Oligo-Dialkanolamide, hergestellt aus gesättigten und/oder ungesättigten C₁₂₋₂₄-Monocarbonsäuren und einem molaren Überschuß von Dialkanolaminen, insbesondere Diethanolamin, verwendet werden.

9. Ausführungsform nach Ansprüchen 1 bis 8, dadurch gekennzeichnet, daß als Komponente (B) unter Normalbedingungen fließfähige Umsetzungsprodukte von bevorzugt wenigstens überwiegend ungesättigten C₁₆₋₂₀-Carbonsäuren und Diethanolamin in 0,5 bis 3-fachem molaren Überschuß zur Carbonsäuremenge verwendet werden.

10. Ausführungsform nach Ansprüchen 1 bis 9, dadurch gekennzeichnet, daß als Komponente (B) die Umsetzungsprodukte aus der Reaktion von Tallölfettsäuren mit Diethanolamin in Molverhältnissen von etwa 1 : 1,5-3 unter Wasserabspaltung und wenigstens weitgehender Oligomerisierung des Diethanolamins verwendet werden.

11. Ausführungsform nach Ansprüchen 1 bis 10, dadurch gekennzeichnet, daß die Inkrustationsinhibitoren in Rohölen und/oder in zur Inkrustationsbildung neigenden Ölfraktionen, insbesondere zum Schutz von Pipelines, Pumpen, Filtern, Tanks und dergleichen gegen unerwünschte Inkrustationsbildung eingesetzt werden.

## Claims

1. The use of
(A) esters of phosphoric acid andlor partial salts thereof with alkoxylated aliphatic, cycloaliphatic and/or aromatic alcohols and
(B) fatty acid oligodialkanolamides (reaction products of fatty acids and dialkanolamines in an at least 0.5-fold molar excess of dialkanolamine)
as inhibitors against the formation of incrustations based on organic solids from flowable liquid andlor gaseous hydrocarbon mixtures with a tendency to form such incrustations.

2. The use claimed in claim 1, characterized in that surface-active inhibitors (A) and (B) capable of wetting and, in particular, spreading on hard surfaces, even in the presence of the flowable hydrocarbon phase, are used.

3. The use claimed in claims 1 and 2, characterized in that the surface-active inhibitors are applied to the walls to be protected, optionally in the form of a solution and/or emulsion or dispersion in aqueous and/or organic auxiliary liquids, the inhibitors preferably being added in small quantities to the incrustation-forming hydrocarbon mixtures.

4. The use claimed in claims 1 to 3, characterized in that the surface-active inhibitors are added to liquid hydrocarbon mixtures in quantities of 5 to 1,000 ppm, preferably in quantities of 10 to 500 ppm and more preferably in quantities of 20 to 200 ppm.

5. The use claimed in claims 1 to 4, characterized in that mixtures of (A) and (B) in quantity ratios of A to B of 5:95 to 95:5, preferably 25:75 to 75:25 and more preferably 40:60 to 60:40 are used.

6. The use claimed in claims 1 to 5, characterized in that partial esters of phosphoric acid and/or salts thereof with alkoxylated phenol compounds are used as the surface-active component (A), mono- and/or diesters of phosphoric acid or salts thereof with ethoxylated and/or propoxylated alkyl phenols being preferred.

7. The use claimed in claims 1 to 6, characterized in that a mixture of the salts of mono- and diesters of phosphoric acid with ethoxylated nonylphenols containing on average 5 to 10 ethylene oxide units per mole of nonylphenol is used as component (A), the corresponding alkali metal salts, ammonium salts, alkanolamine salts andlor amine salts being preferred.

8. The use claimed in claims 1 to 7, characterized in that oligoalkanolamides prepared from saturated andlor unsaturated C₁₂₋₂₄ monocarboxylic acids and a molar excess of dialkanolamines, more particularly diethanolamine, are used as component (B).

9. The use claimed in claims 1 to 8, characterized in that reaction products - flowable under normal conditions - of preferably at least predominantly unsaturated C₁₆₋₂₀ carboxylic acids and diethanolamine in a 0.5 to 3-fold molar excess over the quantity of carboxylic acid are used as component (B).

10. The use claimed in claims 1 to 9, characterized in that reaction products of the reaction of tall oil fatty acids with diethanolamine in molar ratios of about 1:1.5-3 with elimination of water and at least partial oligomerization of the diethanolamine are used as component (B).

11. The use claimed in claims 1 and 10, characterized in that the incrustation inhibitors are used in crude oils and/or in oil fractions with a tendency to form incrustations, more particularly for protecting pipelines, pumps, filters, tanks and the like against the unwanted formation of incrustations.

## Revendications

1. Utilisation de :
(A) Esters de l'acide phosphorique et/ou de ses sels partiels avec des alcools aliphatiques, cycloaliphatiques, et/ou aromatiques alcoxylés, et
(B) Oligo-dialcanolamides d'acides gras (produits de réaction d'acides gras et de dialcanolamines en un excès d'au moins 0,5 fois molaire de dialcanolamine)
comme inhibiteurs contre la formation d'incrustations à base de solides organiques à partir de mélanges d'hydrocarbures fluides, liquides et/ou gazeux et ayant tendance à former de telles incrustations.

2. Mode de réalisation selon la revendication 1,
caractérisé en ce qu'
on utilise des inhibiteurs selon (A) et (B) ayant un caractère tensioactif, qui sont aptes à l'humidification et en particulier au recouvrement de surfaces de matériaux solides même en présence de la phase hydrocarbonée fluide.

3. Mode de réalisation selon les revendications 1 et 2,
caractérisé en ce qu'
on dépose les inhibiteurs tensioactifs sur les zones de parois à protéger, le cas échéant sous forme de solution et/ou d'émulsion ou selon les cas de dispersion dans des liquides auxiliaires aqueux et/ou organiques, les inhibiteurs étant de préférence mélangés en faibles quantités aux mélanges hydrocarbonés formant des incrustations.

4. Mode de réalisation selon les revendications 1 à 3,
caractérisé en ce qu'
on ajoute les mélanges hydrocarbonés liquides inhibiteurs tensioactifs à des quantités de 5 à 1000 ppm, de préférence en des quantités de 10 à 500 ppm, et en particulier en des quantités de 20 à 200 ppm.

5. Mode de réalisation selon les revendications 1 à 4,
caractérisé en ce qu'
on utilise les mélanges de (A) et de (B) dans des proportions de A/B comprises entre 5/95 et 95/5, de préférence comprises entre 25/75 et 75/25 et en particulier entre 40/60 et 60/40.

6. Mode de réalisation selon les revendications 1 à 5,
caractérisé en ce qu'
on utilise comme composant (A) à caractère tensioactif des esters partiels de l'acide phosphorique et/ou leurs sels avec des composés phénols alcoxylés, ce pourquoi on préfère des mono- et/ou diesters de l'acide phosphorique ou selon les cas leurs sels avec des alkyls phénols éthoxylés et/ou propoxylés.

7. Mode de réalisation selon les revendications 1 à 6,
caractérisé en ce qu'
on utilise comme composant (A) un mélange des sels de mono- et diesters de l'acide phosphorique avec des nonylphénols éthoxylés comportant en moyenne de 5 à 10 unités oxyde d'éthylène par mole de nonylphénol, ce pourquoi l'on préfère les sels alcalins, les sels d'ammonium, les sels d'alcanolamine ou les sels d'amine correspondants.

8. Mode de réalisation selon les revendications 1 à 7,
caractérisé en ce qu'
on utilise comme composant (B) des oligo-dialcanolamides préparés à partir d'acides monocarboxyliques en C₁₂ à C₂₄ saturés et/ou insaturés et d'un excès molaire de dialcanolamines, en particulier de diéthanolamines.

9. Mode de réalisation selon les revendications 1 à 8,
caractérisé en ce qu'
on utilise comme composant (B) des produits de réaction, liquides dans les conditions normales, d'acides carboxyliques en C₁₆ à C₂₀ de préférence au moins largement insaturés, et de diéthanolamine, en un excès molaire de 0,5 à 3 fois par rapport à la quantité d'acide carboxylique.

10. Mode de réalisation selon les revendications 1 à 9, caractérisé en ce qu' on utilise comme composant (B) les produits de la réaction d'acides gras de tallol avec la diéthanol amine dans des rapports molaires d'environ 1:1,5-3 avec séparation d'eau et avec au moins une large oligomérisation de la diéthanolamine.

11. Mode de réalisation selon les revendications 1 à 10, caractérisé en ce que l'on met en oeuvre les inhibiteurs d'incrustations dans des huiles brutes et/ou des fractions d'huile ayant une tendance à l'incrustation en particulier pour la protection de pipe lines, de pompes, de filtres, de réservoirs et similaires contre la formation d'incrustation indésirables.
